(19) Europäisches Patentamt
European Patent Office
Office européen des brevets

(11) Publication number: 0 099 187 B1

# (12) EUROPEAN PATENT SPECIFICATION

(45) Date of publication of patent specification: 15.10.86

(21) Application number: 83303481.2

(22) Date of filing: 16.06.83

(51) Int. Cl.$^4$: B 01 D 53/22, B 01 D 13/04, C 01 B 13/02

## (54) Separation of gaseous mixtures using a semi-permeable membrane.

(30) Priority: 16.06.82 US 388847
26.08.82 US 411924

(43) Date of publication of application:
25.01.84 Bulletin 84/04

(45) Publication of the grant of the patent:
15.10.86 Bulletin 86/42

(84) Designated Contracting States:
DE FR GB IT NL

(58) References cited:
DE-B-2 426 515
US-A-3 350 844
US-A-4 230 463

(73) Proprietor: THE STANDARD OIL COMPANY
Midland Building
Cleveland, Ohio 44115 (US)

(72) Inventor: Su-Hsiang Li, George
1069 Riverview
Macedonia Ohio 44056 (US)

(74) Representative: Smith, Sydney et al
Elkington and Fife High Holborn House 52/54
High Holborn
London WC1V 6SH (GB)

EP 0 099 187 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to gas separation utilizing a semi-permeable membrane.

The use of a semi-permeable membrane to effect the separation of a gaseous mixture into its various component parts (or at least enriched fractions of same) has long been known. The development of semi-permeable membranes for this purpose is well summarized at columns 4—6 of US—A—4,230,463. In addition to those membranes there described, others are known for this purpose including those described in US—A—3,350,844 and US—A—3,899,309. While most, if not all, of these membranes show effectiveness in their intended use, none are completely satisfactory. Generally, the membranes used for these separations lack either one or more of desirable flux, selectivity and life and thus industry continues to search for alternatives.

Of particular interest to the chemical processing industry are membranes showing good characteristics for separating carbon dioxide and/or hydrogen sulfide from hydrocarbon streams (typically natural gas) and oxygen enrichment from air. Commercially, these processes do not employ membranes but rather absorption techniques in the former and cryogenic techniques in the latter. Both of these techniques are energy intensive and consequently expensive to operate. Accordingly, there exists the need for identifying and implementing alternative processes and those employing membrane technology appear at this time to offer significant economic advantages. However, to date no membrane has been identified as completely suitable for either one of these processes.

According to this invention, a process for separating a gaseous mixture containing at least one of carbon dioxide, oxygen and hydrogen sulfide into two fractions, one fraction being enriched with at least one of the carbon dioxide, oxygen and hydrogen sulfide and the other fraction being depleted in same, is improved by using as the separation vehicle a semi-permeable membrane containing at least 25 weight percent, based upon the total weight of the membrane, of at least one substituted poly(arylene oxide) polymer containing at least 50 mole percent of structural units of the formula

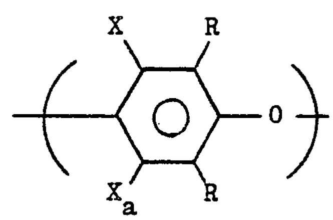

(I)

where each R is independently a $C_1$—$C_6$ alkyl radical and each X is independently a chloride, bromide or iodide radical and a is 0 or 1.

This process operates in substantially the same manner as known processes, i.e. the gaseous mixture is contacted with the semi-permeable membrane in such a manner that a portion of the gaseous mixture selectively passes through the membrane resulting in the enriched fraction being on one side of the membrane while the depleted fraction remains on the other side of the membrane. This process is particularly useful for separating carbon dioxide and hydrogen sulfide from natural gas streams, as they are constituted at the wellhead, and for producing an enriched oxygen stream from air. The process of this invention is characterized by excellent flux and selectivity, particularly in relation to separating carbon dioxide from methane and oxygen from nitrogen.

The invention will be further described under appropriate headings:

Gaseous Mixtures:

The process of this invention is suitable for separating any one of a number of different gases from mixtures containing same. This invention is particularly useful for separating carbon dioxide and/or hydrogen sulfide from natural gas and oxygen from air. The relative amount of the gases comprising the gaseous mixture can vary widely and thus this invention finds applicability in a wide variety of separation activities.

Semi-Permeable Membrane:

The membrane here used according to the invention contains at least 25 weight percent of at least one substituted poly(arylene oxide) polymer containing structural units of the formula

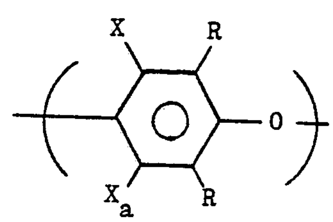

(I)

where R, X and a are as previously defined.

Typical R radicals include methyl, ethyl, n-propyl, isopropyl, butyl and t-butyl. As here used, the term "independently" means that each substituent can be the same or different on any given structural unit, e.g. each R can be methyl or one can be methyl while the other ethyl.

The X radicals of formula I serve, at least in part, as steric inhibitors. A preferred radical is the bromide radical. In those structural units of formula I where the subscript a is zero, the ring valence otherwise satisfied by the X radical is satisfied by a hydrogen atom.

The substituted poly(arylene oxide) polymers which are used can be either homo- or copolymers and in the latter case will contain at least 50 mole percent, preferably at least 75 mole percent, structural units of formula I. If the polymer is a copolymer, then the comonomers other than units of formula I can consist of essentially any structural unit, such as bisphenol A, bisphenol sulfone, etc., that can be copolymerized with the structural units of formula I.

Preferably, the substituted poly(arylene oxide) polymers used here consist essentially of structural units of formula I although not each structural unit may contain the same substituents (e.g. the same R or X radicals). Ring-brominated poly(2,6-dimethyl-p-phenylene oxide), also known as ring-brominated poly(2,6-dimethyl-1,4-phenylene oxide) and ring-brominated poly(xylylene oxide) or poly(2,6-xylenol), is an especially preferred substituted polyarylene polymer. Practical considerations, such as economy, ease of membrane fabrication, etc., are the only significant limitations on the molecular weight of these substituted poly(arylene oxide) polymers.

The substituted poly(arylene oxide) polymers used here are generically known materials and thus the preparation of many of them is known in the art. For example, ring-brominated poly(2,6-dimethyl-p-phenylene oxide) can be readily prepared by first polymerizing 2,6-xylenol as taught by A. S. Hay in the *Journal of Polymer Science, 58,* 581 (1962) entitled "Polymerization by Oxidative Coupling" and subsequently brominating the polymer under ionic conditions as taught by White and Orlando in *Polyethers, 12,* 178 (1974) entitled "Brominated Poly(Phenylene Oxide)s. II Bromination of Poly(2,6-dimethyl-1,4-Phenylene Oxide)." By analogous steps, many of the other substituted polyarylene oxide polymers here described can be prepared.

The semi-permeable membranes used in this invention are constructed from at least one of the substituted poly(arylene oxide) polymers containing structural units of formula I. Any polymer that is compatible with the substituted poly(arylene oxide) polymer(s) can also be used in the construction of the membrane and typical polymers include poly(aryl sulfone), poly(phenylene oxide), poly(maleic anhydride) and its various copolymers.

While the molecular weight of these polymers can vary widely, they are usually within a fifty percent range of the molecular weight of the substituted poly(arylene oxide) polymer. Although some blending of polymers may be desirable to impart certain physical characteristics to the membrane, such as strength, durability and flexibility, generally the incorporation of other polymers into the membrane is preferably kept to a minimum to avoid diluting the flux and selectivity characteristics imparted to it by the substituted poly(arylene oxide) polymer. Accordingly, the substituted poly(arylene oxide) polymer constitutes at least 25, preferably at least 50 and more preferably at least 75 weight percent of the membrane.

These membranes are fabricated by the conventional methods used to fabricate other membranes and in one embodiment, the polymer is dissolved in a suitable solvent to form a 1—20, preferably 5—10 weight percent solution. Generally any nonpolar solvent can be employed examples of such solvents being chloroform, toluene, chlorobenzes (e.g. o-dichlorobenzene) and the chlorinated hydrocarbons (e.g. perchloroethylene). These nonpolar solvents can be used in combination with polar solvents, such as dimethylformamide, dimethyl sulfoxide, dimethyl acetamide, acetone and methylethyl ketone but in such combinations, the nonpolar solvent(s) constitutes at least 50 weight percent of the mixture. If a crosslinker and/or another polymer is used in the manufacture, then a 1—20, preferably 5—10, weight percent solution of these materials is prepared, generally in the same solvent used to prepare the substituted poly(arylene oxide) polymer solution, and then the two or more solutions are mixed at room temperature. The resulting mixture can then be poured over a clean glass plate and spread evenly to a uniform thickness with the aid of some instrument, e.g. a doctor blade. The membrane is then air dried, removed from the glass plate and further dried in air under ambient conditions for a suitable period of time, generally in excess of 24 hours. Crosslinking, if any, and solvent evaporation (removal) occur concurrently throughout the drying step. In other embodiments, these membranes can be manufactured by the various laboratory and commercial techniques known in the art. These membranes can also be manufactured into structures other than films, such as hollow fibers. Moreover, these membranes or films can be used in composite formulations, such as a coating on a substrate, laminates, etc.

The membranes used in this invention can be fabricated at any desired thickness although membranes having a thickness less than about 625 μm (25 mils) preferably less than about 250 μm (10 mils), tend to be the most useful. Because the flux of a membrane tends to increase with a decrease in the thickness of the membrane, generally the thinner the membrane, the more desirable the membrane. Of course, the ultimate thickness of the membrane is determined by a whole host of factors of which flux is just one and thus the preferred membrane thickness will vary from application to application.

Process Operation:

The semi-permeable membranes of this invention are used in the same manner as conventional

membranes, i.e. the gaseous mixture is contacted with one side of the membrane, typically under pressure, and one or more gaseous constituents of the mixture are selectively passed through the membrane while the remaining gaseous constituents are rejected by the membrane. This results in an enriched fraction of the desired gas forming on one side of the membrane while a depleted fraction of the same gas is formed on the other side of the membrane. Generally the desired gas is passed through the membrane, i.e. in separating carbon dioxide from the other gaseous constituents of natural gas, carbon dioxide passes through the membrane while the majority of the other gaseous constituents are rejected. However, certain gases will generally not be rejected by these membranes and these are generally molecules of small size, such as hydrogen and helium. Likewise, in the separation of oxygen from the other gaseous components of air, oxygen permeates through the membrane while nitrogen and various other gaseous components are selectively rejected.

Operating temperatures employed in the process of the invention can vary widely and are generally those used under similar separation processes. Any temperature at which the membrane is both physically and chemically stable can be used while the pressure will vary with, among other parameters, the physical strength of the membrane.

The following examples illustrate the invention and unless indicated to the contrary, all parts and percentages are by weight.

Specification Embodiments

Polymer Preparation:

The polymers here used to manufacture the membranes were all based upon poly(2,6-dimethyl-p-phenylene oxide) (subsequently "polymer") having a weight average molecular weight of about 40,000 (sold by Aldrich Chemical Company). A typical preparation of a ring-brominated polymer commenced with contacting the polymer (60 g) dissolved in chloroform (600 g) at room temperature with bromine (94 g) in a glass reactor. Contacting or addition time was approximately 45 minutes. The reaction mixture was then further stirred at room temperature for an additional hour. The final mixture was poured into stirred methanol to precipitate the polymer, the product polymer was further washed with methanol and dried under vacuum to give 97 g of product. Elemental analysis showed the bromide content of the polymer to be about 40 weight percent and proton NMR spectroscopy showed that the bromide radical was attached to the aromatic ring portion of the polymer.

The polymer was also used to prepare a control polymer, i.e. benzylic-brominated poly(2,6-dimethyl-p-phenylene oxide). This preparation commenced by contacting the polymer (70 g) dissolved in 1500 g of carbon tetrachloride with N-bromosuccimide (220 g) and benzoyl peroxide (3 g). The reaction mixture was then heated with stirring to 76°C for approximately 6 hours under a nitrogen atmosphere. Isolation and purification of the product polymer were identical to those used for preparing the ring-brominated material and a yield of 102 g of product polymer was recovered. Elemental analysis showed that the bromide content of the product polymer to be approximately 35.5 weight percent and the proton NMR spectrum showed the bromination occurred primarily on the benzylic (methyl) position of the polymer.

Membrane Preparation:

The membranes tested here were prepared from the brominated poly(2,6-dimethyl-p-phenylene oxide) polymers prepared by the above procedure although those of Examples 2 and 3 were prepared from a blend containing another polymer. The membrane was prepared by mixing a dilute 7 to 8 weight percent) solution of brominated polymer or blend in a suitable solvent, typically chloroform, poured over a clean glass plate and spread evenly to a uniform thickness with the aid of a doctor blade, air dried, removed from the glass plate, and further dried in air at ambient conditions for at least 24 hours.

Apparatus and Procedure:

A modified Gilbert cell was used to test the permeation of the films. The test side was exposed to a carbon dioxide/methane/nitrogen mixture in a mole ratio of 2.99:32:65. The permeant was picked up by a carrier gas, helium, and injected intermittently through a sample valve into a GC column for analysis. The experiments were conducted at 23°C, the partial pressure of the test gas on the feed side was 200 kPa (29.8 psi) and the partial pressure of the product gas on the permeant side was about 0 and purged with 200 kPa (29.8 psi) helium at a flow-rate much in excess of the permeation rate. The area of the test membrane was 7.1 square inches (47.3 $cm^2$). The film thickness was between 25—50 μm (1—2 mils).

The carbon dioxide permeability and carbon dioxide/methane selectivity figures are reported in Table I. The polymer(s) from which the membrane was constructed is given in the column captioned "Polymer" and the bromide content of each of these polymers is given in the parentheses following its identification. RB—PPO means ring-brominated poly(2,6-dimethyl-p-phenylene oxide), PPO means poly(2,6-dimethyl-p-phenylene oxide), BB—PPO means benzylic-brominated poly(2,6-dimethyl-p-phenylene oxide), and PAS means poly(aryl sulfone).

The separation factor was calculated by the following formula:

$$\text{Separation Factor} = \frac{\text{Carbon Dioxide Permeation Factor}}{\text{Methane Permeation Factor}}$$

The permeation factor is expressed as the quotient of the product of product gas volume (ml at STP) times membrane thickness (cm) divided by the product of membrane surface area ($cm^2$) times the pressure differential across the membrane (cm Hg) times the period of separation (s). The factor $10^{-10}$ is used simply for convenience.

TABLE I

Separation Characteristics of Semi-permeable Membranes prepared from various Substituted Poly(2,6-Dimethyl-p-Phenylene Oxide) Polymers

| Ex. | Polymer | Separation | $CO_2$ Permeation Factor $cm^3/cm/10^{-10}$ $cm^2/cm(Hg)/s$ |
|---|---|---|---|
| 1 | RB—PPO (40%) | 22 | 180 |
| 2 | 2:1 Blend[2] RB—PPO(40%):PAS(7%)[1] | 31 | 30 |
| 3 | 1:1 Blend[2] RB—PPO(40%):PPO 20 | 20 | 154 |
| 4 | RB—PPO (32%) | 20 | 149 |
| A | PPO | 18 | 87 |
| B | BB—PPO (36%) | 15.3 | 22 |

[1] Poly(aryl sulfone)(weight average molecular weight 30,000, containing about 7% sulfur, sold by Aldrich Chemical Company).
[2] By weight.

The data of Table I clearly demonstrate the general superiority of membranes formed from ring-brominated poly(2,6-dimethyl-p-phenylene oxide) polymers over membranes formed from similar polymers but without an X group. The separation factor was much greater with a ring-brominated polymer than for either the benzylic-brominated or unbrominated polymers as was the carbon dioxide permeation factor.

The above procedure for determining carbon dioxide permeability and carbon dioxide/methane selectivity was repeated except a mixture of oxygen and nitrogen at a mole ratio of 21.3:78.7 was used. The results of this testing are reported in Table II.

TABLE II

Separation Characteristics of Semi-permeable Membranes prepared from various Substituted Poly(2,6-Dimethyl-p-Phenylene Oxide) Polymers

| Ex. | Polymer | Separation | $O_2$ Permeation Factor $cm^3/cm/10^{-10}$ $cm^2/cm(Hg)/s$ |
|---|---|---|---|
| 5 | RB—PPO (40%) | 3.86 | 23 |
| C | B—PPO (36%) | 4.0 | 3.2 |
| D | PPO | 4.3 | 13.1 |

The data of Table II again shows the superior of a ring-brominated poly(2,6-dimethyl-p-phenylene oxide) polymer over its benzylic brominated and unbrominated counterparts.

**Claims**

1. A process for separating a gaseous mixture containing at least one of $CO_2$, $O_2$ and $H_2O$ into two fractions, one fraction being enriched with at least one of $CO_2$, $O_2$ and $H_2S$ and the other fraction being depleted in same, which process comprises contacting the gaseous mixture with a semi-permeable membrane in such a manner that a portion of the gaseous mixture selectively passes through the membrane resulting in the enriched fraction being on one side of the membrane and the depleted fraction

being on the other side of the membrane, characterised in that there is used a membrane containing at least 25 weight percent, based upon the total weight of the membrane, of at least one substituted poly(arylene oxide) polymer containing at least 50 mole percent of structural units of the formula

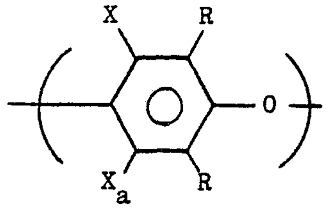

(I)

where

each R is independently a $C_1$—$C_6$ alkyl radical and

each X is independently a chloride, bromide or iodide radical and a is 0 or 1.

2. A process as claimed in claim 1 characterised in that each R is a methyl radical.

3. A process as claimed in claim 1 or claim 2 characterised in that each X is a bromide radical.

4. A process as claimed in any of claims 1 to 3 characterised in that the substituted poly(arylene oxide) polymer contains at least about 75 mole percent of the structural units of formula I.

5. A process as claimed in claim 4 characterised in that the substituted poly(arylene oxide) polymer consists essentially of structural units of formula I.

6. A process as claimed in any of claims 1 to 5 characterised in that the membrane contains at least 50 weight percent, based upon the total weight of the membrane, of at least one substituted poly(arylene oxide) polymer.

7. A process as claimed in any claims 1 to 5 characterised in that the membrane contains at least 75 weight percent, based upon the total weight of the membrane, of at least one substituted poly(arylene oxide) polymer.

8. A process as claimed in claim 5 characterised in that the membrane is constructed essentially from one or more substituted poly(xylylene oxide) polymers.

9. A process as claimed in claim 5 characterised in that the membrane contains essentially ring-brominated poly(2,6-dimethyl-p-phenylene oxide).

10. A process as claimed in claim 6 characterised in that the membrane contains at least one substituted poly(xylyene oxide) polymer in combination with a compatible polymer.

11. A process as claimed in claim 10 characterised in that the compatible polymer is poly(aryl sulfone) or poly(2,6-dimethyl-p-phenylene oxide).

12. A process as claimed in any one of claims 1 to 11 characterised in that the membrane is a hollow fiber.

13. A process as claimed in claim 12 characterised in that the membrane has a thickness less than 0,254 mm (10 mils).

14. A process as claimed in any of claims 1 to 11 characterised in that the membrane is cast as a coating on a substrate.

15. A process as claimed in claim 14 characterised in that the coated substrate is a hollow fiber.

16. A process as claimed in any of claims 1 to 15 characterised in that the gaseous mixture is natural gas.

17. A process as claimed in any of claims 1 to 15 characterised in that the gaseous mixture is air.

**Patentansprüche**

1. Verfahren zur Trennung einer Gasmischung, die mindestens eine der Komponenten $CO_2$, $O_2$ und $H_2S$ enthält, in zwei Fraktionen, von denen eine Fraktion angereichert ist an mindestens einer der Komponenten $CO_2$, $O_2$ und $H_2S$ und die andere Fraktion an derselben verarmt ist, das umfaßt das Inkontaktbringen der Gasmischung mit einer semipermeablen Membran in der Weise, daß ein Teil der Gasmischung die Membran selektiv passiert, so daß man auf einer Seite der Membran die angeriecherte Fraktion und auf der anderen Seite der Membran die verarmte Fraktion erhält, dadurch gekennzeichnet, daß eine Membran verwendet wird, die mindestens 25 Gew.-%, bezogen auf das Gesamtgewicht der Membran, mindestens eines substituierten Poly(arylenoxid)polymeren enthält, das mindestens 50 Mol-% Struktureinheiten der Formel

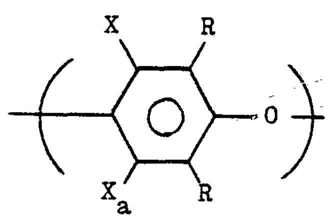

(I)

enthält, worin jedes R unabhängig einen $C_1$—$C_6$-Alkylrest und jedes X unabhängig einen Chlorid-, Bromid- oder Jodidrest und a die Zahl 0 oder 1 bedeuten.

2. Verfahren nach Anspruch 1, dadurch gekennzeichnet, daß jedes R einen Methylrest darstellt.

3. Verfahren nach Anspruch 1 oder 2, dadurch gekennzeichnet, daß jedes X einen Bromidrest darstellt.

4. Verfahren nach einem der Ansprüche 1 bis 3, dadurch gekennzeichnet, daß das substituierte Poly(arylenoxid)-polymere mindestens etwa 75 Mol-% der Struktureinheiten der Formel I enthält.

5. Verfahren nach Anspruch 4, dadurch gekennzeichnet, daß das substituierte Poly(aryleneoxid)polymere im wesentlichen aus Struktureinheiten der Formel I besteht.

6. Verfahren nach einem der Ansprüche 1 bis 5, dadurch gekennzeichnet, daß die Membran mindestens 50 Gew.-%, bezogen auf das Gesamtgewicht der Membran, mindestens eines substituierten Poly(arylenoxid)polymeren enthält.

7. Verfahren nach einem der Ansprüche 1 bis 5, dadurch gekennzeichnet, daß die Membran mindestens 75 Gew.-%, bezogen auf das Gesamtgewicht der Membran, mindestens eines substituierten (Poly(arylenoxid)polymeren enthält.

8. Verfahren nach Anspruch 5, dadurch gekennzeichnet, daß die Membran im wesentlichen aus einem oder mehr substituierten Poly(xylylenoxid)polymeren aufgebaut ist.

9. Verfahren nach Anspruch 5, dadurch gekennzeichnet, daß die Membran im wesentlichen Ringbromiertes Poly(2,6-dimethyl-p-phenylenoxid) enthält.

10. Verfahren nach Anspruch 6, dadurch gekennzeichnet, daß die Membran mindestens ein substituiertes Poly(xylylenoxid)-polymeres in Kombination mit einem kompatiblen Polymeren enthält.

11. Verfahren nach Anspruch 10, dadurch gekennzeichnet, daß das kompatible Polymere Poly(arylsulfon) oder Poly-(2,6-dimethyl-p-phenylenoxid)ist.

12. Verfahren nach einem der Ansprüche 1 bis 11, dadurch gekennzeichnet, daß die Membran eine hohle Faser ist.

13. Verfahren nach Anspruch 12, dadurch gekennzeichnet, daß die Membran eine Dicke von weniger als 0,254 mm (10 mils) hat.

14. Verfahren nach einem der Ansprüche 1 bis 11, dadurch gekennzeichnet, daß die Membran in Form eines Überzugs auf ein Substrat gegossen wird.

15. Verfahren nach Anspruch 14, dadurch gekennzeichnet, daß das beschichtete Substrat eine hohle Faser ist.

16. Verfahren nach einem der Ansprüche 1 bis 15, dadurch gekennzeichnet, daß die Gasmischung Erdgas ist.

17. Verfahren nach einem der Ansprüche 1 bis 15, dadurch gekennzeichnet, daß die Gasmischung Luft ist.

**Revendications**

1. Procédé de séparation d'un mélange de gaz contenant au moins l'un parmi $CO_2$, $O_2$ et $H_2S$ en deux fractions, une fraction étant enrichie en au moins l'un parmi $CO_2$, $O_2$ et $H_2S$, et l'autre fraction étant appauvrie en cette même (ou ces mêmes) substance(s), ledit procédé consistant à mettre le mélange de gaz en contact avec une membrane semi-perméable, d'une manière telle qu'une partie du mélange de gaz traverse de manière la membrane, d'où il résulte que la fraction appauvrie se trouve de l'autre côté de la membrane, caractérisé en ce que l'on utilise une membrane contenant au moins 25 pour cent en poids, par rapport au poids total de la membrane, d'au moins un polymère du type poly(oxyde d'arylène) substitué, contenant au moins 50 pour cent en mole de motifs structuraux de formule:

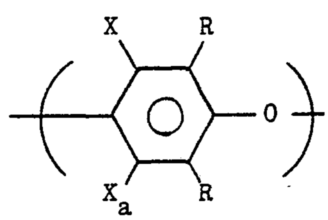

(I)

dans laquelle chaque R est, indépendamment, un radical alkyle en $C_1$—$C_6$ et chaque X est, indépendamment, un radical chlorure, bromure ou iodure, et a vaut 0 ou 1.

2. Procédé tel que revendiqué dans la revendication 1, caractérisé en ce que chaque R est un radical méthyle.

3. Procédé tel que revendiqué dans la revendication 1 ou la revendication 2, caractérisé en ce que chaque X est un radical bromure.

4. Procédé tel que revendiqué dans l'une quelconque des revendications 1 à 3, caractérisé en ce que le polymère du type poly(oxyde d'arylène) substitué contient au moins environ 75 pour cent en mole des motifs structuraux de formule I.

5. Procédé tel que revendiqué dans la revendication 4, caractérisé en ce que le polymère du type poly(oxyde d'arylène) substitué est essentiellement constitué par des motifs structuraux de formule I.

6. Procédé tel que revendiqué dans l'une quelconque des revendications 1 à 5, caractérisé en ce que la membrane contient au moins 50 pour cent en poids, rapporté au poids total de la membrane, d'au moins un polymère du type poly(oxyde d'arylène) substitué.

7. Procédé tel que revendiqué dans l'une quelconque des revendications 1 à 5, caractérisé en ce que la membrane contient au moins 75 pour cent en poids, rapporté au poids total de la membrane, d'au moins un polymère du type poly(oxyde d'arylène) substitué.

8. Procédé tel que revendiqué dans la revendication 5, caractérisé en ce que la membrane est réalisée essentiellement à partir d'un ou plusieurs polymères du type poly(oxyde de xylylène) substitué.

9. Procédé tel que revendiqué dans la revendication 5, caractérisé en ce que la membrane contient essentiellement du poly(oxyde de diméthyl-2,6 p-phénylène) à cycle bromé.

10. Procédé tel que revendiqué dans la revendication 6, caractérisé en ce que la membrane contient au moins un polymère du type poly(oxyde de xylylène) substitué en combinaison avec un polymère compatible.

11. Procédé tel que revendiqué dans la revendication 10, caractérisé en ce que le polymère compatible est une poly(arylsulfone) ou un poly(oxyde de diméthyl-2,6 p-phénylène).

12. Procédé tel que revendiqué dans l'une quelconque des revendications 1 à 11, caractérisé en ce que la membrane est une fibre creuse.

13. Procédé tel que revendiqué dans la revendication 12, caractérisé en ce que la membrane a une épaisseur inférieure à 0,254 mm (10 mils).

14. Procédé tel que revendiqué dans l'une quelconque des revendications 1 à 11, caractérisé en ce que la membrane est coulée sous forme d'un revêtement sur un substrat.

15. Procédé tel que revendiqué dans la revendication 14, caractérisé en ce que le substrat revêtu est une fibre creuse.

16. Procédé tel que revendiqué dans l'une quelconque des revendications 1 à 15, caractérisé en ce que le mélange gazeux est du gaz naturel.

17. Procédé tel que revendiqué dans l'une quelconque des revendications 1 à 15, caractérisé en ce que le mélange de gaz est de l'air.